# EUROPÄISCHE PATENTSCHRIFT

(11) **EP 2 739 588 B1**
(45) Veröffentlichungstag und Bekanntmachung des Hinweises auf die Patenterteilung: **29.11.2017**
(21) Anmeldenummer: 12737248.0
(22) Anmeldetag: 10.07.2012
(51) Int. Cl.: C04B 35/622, C04B 35/80, F16D 69/02

(54) **VERFAHREN ZUR HERSTELLUNG FASERVERSTÄRKTER KERAMISCHER FORMKÖRPER**
METHOD FOR PRODUCING FIBER REINFORCED CERAMIC SHAPED BODIES
PROCÉDÉ DE FABRICATION DE CORPS MOULÉS EN CÉRAMIQUE RENFORCÉE PAR DES FIBRES

(30) Priorität: 01.08.2011 DE 102011080205
(43) Veröffentlichungstag der Anmeldung: 11.06.2014
(73) Patentinhaber: Bayerische Motoren Werke Aktiengesellschaft, 80809 München (DE)
(72) Erfinder: SCHMIDT, Harald, 82205 Gilching (DE); KLINKENBERG, Franz-Josef, 84030 Ergolding (DE); BASTIAN, Sylvain, 80637 Muenchen (DE); BOES, Jörn, 71106 Magstadt (DE)
(86) Internationale Anmeldenummer: PCT/EP2012/063507
(87) Internationale Veröffentlichungsnummer: WO 2013/017379

(56) Entgegenhaltungen:
- EP-A1- 0 636 428
- EP-A1- 1 950 253
- EP-A2- 1 160 068
- EP-A2- 1 911 990
- WO-A1-03/089212
- WO-A1-2011/098486
- WO-A2-2011/007184

## Beschreibung

Die Erfindung betrifft ein Verfahren zur Herstellung faserverstärkter keramischer Formkörper nach dem Oberbegriff des Anspruchs 1. Den nächstliegenden Stand der Technik bildet die WO 2011/007 184 A2. Darin ist ein Verfahren zur Herstellung einer dreidimensionalen Faserstruktur offenbart, wobei ein flüssiges Trägermaterial mit Fasern und Bindemittel über ein Substrat geleitet wird, um Fasern auf dem Substrat abzuscheiden, sodass eine dreidimensionale Fasermatrix gebildet wird, wonach das Bindemittel aushärtet. Dabei enthalten die Fasern neben frischen Kohlenstofffasern auch recycelte Kohleristofffasern.

Allgemein können bei der Herstellung faserverstärkter keramischer Formkörper bspw. nach dem sog. LSI-Verfahren ("Liquid Silicon Infiltration") sog. Grünlinge aus einer pressfähigen und kohlenstoffhaltige Fasern enthaltenden Kunststoffmasse geformt und daraufhin einer thermischen Degradation in inerter Atmosphäre unterworfen werden, wonach eine thermische Konsolidierung und Vakuuminfiltration mit Flüssigmetall unter Reaktion des freien Kohlenstoffs mit dem Flüssigmetall zur Bildung von Metallcarbiden durchgeführt wird. Eine Verdichtung im Laufe des Herstellprozesses kann dabei durch Press-Formen erfolgen, daneben kann die Verdichtung aber auch nur im Rahmen des Keramisierungs-Prozesses beim Herstellen des Formkörpers erfolgen, so beispielsweise beim bekannten sog. CVI-Verfahren ("Chemical Vapour Infiltration"), indem auf einem in Bauteil-Form fixierten Fasergebilde durch Einleiten eines geeigneten Gasgemisches das Matrixmaterial bzw. Kohlenstoff abgeschieden bzw. angelagert wird, was eine des Fasergebildes Verdichtung bewirkt.

Als weiterer Stand der Technik wird neben der DE 43 25 775 C2 oder der DE 10 2009 023 529 A1 auf die EP 1 211 231 B1 verwiesen. In der letztgenannten EP 1 211 231 B1 ist ein Verfahren zum Herstellen eines Reibkörpers, beispielsweise einer Fahrzeug-Bremsscheibe oder Kupplungsscheibe, aus siliziuminfiltriertem, kohlenstofffaserverstärktem porösen Kohlenstoff beschrieben. Solche Bremsscheiben zeichnen sich durch geringes Gewicht und beste Dauerhaltbarkeit aus, sind jedoch - ebenso wie beschusssicher gestaltete Fzg.-Aufbauteile, die auf ähnliche Weise hergestellt werden, jedenfalls derzeit noch extrem teuer in der Herstellung, unter anderem auch aufgrund der Materialkosten. Letztere können - wie grundsätzlich bekannt - durch den zusätzlichen Einsatz von Resten von faserverstärktem Kunststoffmaterial aus einer anderen Produktionslinie verringert werden.

Wie eine vorstehend genannte Resteverwertung in günstiger Weise erfolgen kann, wird mit der vorliegenden Erfindung aufgezeigt, d.h. dies ist Aufgabe der vorliegenden Erfindung, deren Lösung sich mit den Merkmalen des Anspruchs 1 ergibt. Vorteilhafte Weiterbildungen des darin beschriebenen Herstellverfahrens sind Inhalt der Unteransprüche.

Grundsätzlich ist es bekannt, Faserverbundabfälle wieder zu verwerten. Nach der (bereits genannten) DE 10 2009 023 529 A1 werden Faserverbundabfälle aus ungetränkten Karbonfasern auf mechanischem Wege mechanisch zu hochwertigen Faserhalbzeugen recycelt. Nach der DE 43 25 775 C2 werden Abfälle oder Reststücke aus kohlenstofffaserhaltigen Verbundwerkstoffen mit einer Kunststoff-Matrix in einem ersten Schritt zur vollständigen Umwandlung in aus Kohlenstoff bestehende Bestandteile einer Verkokungsbehandlung unterworfen, in einem zweiten Schritt werden die Verkokungsprodukte mit einem kohlenstoffhaltigen, verkokbaren Binder gemischt, in einem dritten Schritt wird die durch den zweiten Schritt erhaltene Mischung mittels einer Formgebungseinrichtung zu einem Körper geformt, und in einem vierten Schritt wird dieser Formkörper verkokt.

Mit vorliegender Erfindung wird nun ein Herstellverfahren für faserverstärkte keramische Formkörper mit keramischer Matrix und Verstärkungsfasern, vorgeschlagen, wobei die Verstärkungsfasern wenigstens teilweise aus faserhaltigen Produktions-Resten bestehen und wenigstens einem Recycling-Prozess unterzogen werden. Die genannten Produktions-Reste, die im weiteren auch nur als Reste oder als Reste-Material bezeichnet werden, entstammen dabei üblicherweise einer anderen Produktionslinie, in der zumeist mit einem anderen Herstellprozess andere faserverstärkte Kunststoff-Bauteile hergestellt werden. Dabei können diese Produktions-Reste unterschiedlichen Prozessstufen eines Herstellungsprozesses für kohlenstofffaserverstärkte Kunststoffhalbzeuge entstammen, die beispielsweise als Strukturbauteile in der Serienfertigung von sich durch Leichtbau auszeichnenden Kraftfahrzeugen, insbesondere Personenkraftwagen, eingesetzt werden. Diese faserhaltigen Produktionsreste können dann auch einen gewissen Anteil an Binder oder Matrixharz (= Kunststoffmasse) aufweisen. Konkrete Beispiele für solche faserhaltigen Produktionsreste sind Verschnitte beim Konfektionieren sowie aus Lagen und Matten bei der Preform-Herstellung, wobei als Verunreinigungen ein Fremdanteil an PES-Garn, EP-Binder, und/oder Epoxy-Schlichte vorhanden sein kann. Ein weiteres konkretes Beispiel für faserhaltige Produktionsreste sind Verschnitte bei der Herstellung von. Nasspressbauteilen, also von bereits mit Kunststoff-Matrix versehenen Produktionsresten und aus Überlaufkavitäten der Herstellungsmaschinen, wobei ein Fremdanteil an duroplastischer Matrix wie beispielsweise Epoxy- oder Phenolharze, Binder, und/oder Epoxy-Schlichte vorhanden sein kann.

Erfindungsgemäß können diese Reste weiter verwendet werden, wobei idealerweise zunächst eine mechanische Zerkleinerung durchgeführt wird. Danach werden diese Reste für die Weiterverwendung zur Herstellung faserverstärkter keramischer Formkörper weiter aufbereitet, d.h. einem bereits genannten Recycling-Prozesses zu unterwerfen, wobei insbesondere die kohlenstoffhaltigen. Fasern, bei welchen es sich vorzugsweise um Karbonfasern handelt, jedenfalls näherungsweise sozusagen isoliert werden, das heißt es wird dabei der Anteil von reinem Kunststoff in den Produktions-Resten gegenüber dem Ausgangszustand, in welchem ein wiederzuverwertendes faserverstärktes Kunststoffmaterial vorliegt, verringert. Ebenfalls verringert werden sollte der Anteil- von Verunreinigungen in Form von Fremdmaterialien in den zu verwertenden Produktions-Resten.

Die Aufbereitung kann zunächst auf mechanischem Weg erfolgen, indem die Produktions-Reste zunächst zerkleinert werden, was durch Schneiden oder unter Einwirkung durch Schlagkörper erfolgen kann. Möglich ist auch ein vorhergehendes Verspröden der Reste aus einer anderen Produktionslinie vorzugsweise bei tiefen Temperaturen, beispielsweise durch Eintauchen in flüssigen Stickstoff. Liegen die wiederzuverwertenden Reste in Form von Matten oder Lagen vor, so können diese einfach mechanisch geöffnet werden. Zur Verringerung des Anteils von Kunststoff vor der Wiederverwendung können auch geeignete chemische Maßnahmen zum Einsatz kommen, was selbstverständlich auch für die Verringerung von (sonstigen) Verunreinigungen im Reste-Material gilt.

Es kann eine thermische Behandlung der Produktions-Reste erfolgen, da damit insbesondere der Kunststoffanteil im Reste-Material effizient verringert werden kann. Hierbei handelt es sich quasi um den bekannten Pyrolyseprozess bzw. die thermische Degradation, die im Stand der Technik zur Herstellung faserverstärkter keramischer Formkörper auch mit der im Stand der Technik verwendeten Faser-Neuware durchgeführt wird. Insbesondere für die Aufbereitung eines mechanisch zerkleinerten Nasspressbauteilverschnitts ist es aufgrund des gegebenenfalls hohen Anteils an Bindemittel und Matrixharz (= Kunststoffmasse) vorteilhaft, diesen besagten Produktionsrest vorab einem Pyrolyseprozess in inerter Atmosphäre zu unterziehen, so dass sich der hohe organische Anteil in Form von Bindemittel und Matrixharz verringert. Danach kann dieses so vorbehandelte Material einem im weiteren gesamthaft beschriebenen Herstellungsverfahren im Verfahrensschritt "Erzeugung der zu verdichtenden Masse" zugeführt werden.

Zunächst sei jedoch erläutert, dass neben den erfindungsgemäß aufbereiteten Produktionsresten auch ein Anteil von mit Kunststoff versehener Faser-Neuware zur Darstellung der zu verdichtenden und kohlenstoffhaltige Fasern enthaltenden Kunststoffmasse, aus welcher die Grünlinge oder allgemein die keramischen Formkörper geformt werden, verwendet werden kann, d.h. es kann das aufbereitete Reste-Material um solche Faser-Neuware ergänzt werden. Bei dieser Faser-Neuware kann es sich neben üblicher Rollenware um ein geeignetes Pulverharz-Faser-Compound handeln, aber auch um Restspulen an Rollenware von Fasern und Tapes, die üblicherweise mit Epoxy-Schlichte und ggf. bereits mit Binder versehen sind. Nicht nur solches Reste-Material, sondern die geeignet aufbereiteten Produktions-Reste gesamthaft stellen im weiteren Herstellungsprozess je nach Anteil des Binders oder der Kunststoffmasse im Verhältnis zu den kohlenstoffhaltigen Fasern anteilige Kohlenstoffquellen dar, die beim Herstellungsprozess für die erfindungsgemäß hergestellten keramischen Formkörper zum Einsatz kommen.

Das erfindungsgemäße Verfahren zur Herstellung faserverstärkter keramischer Formkörper kann als einen quasi vorgelagerten Verfahrensschritt die bereits in Details geschilderte Aufbereitung von Produktionsresten beinhalten. Auch wenn dieser quasi vorgelagerte Verfahrensschritt nicht durchgeführt wird, erfolgt erfindungsgemäß die Erzeugung einer zu verdichtenden Masse mit Produktionsresten, ggf. unter Beimengung von Faser-Neuware, anschließend die Formgebung und Härtung dieser Masse zu den Formkörpern ("Gründlingen") und folgend die thermische Degradation der Grünlinge in inerter Atmosphäre zur Bildung poröser Braunlinge. Gegebenenfalls erfolgt eine Nachbearbeitung dieser und vor oder während oder nach der thermischen Degradation der Grünlinge die Aufbringung einer Schicht mit reduziertem Faseranteil als Reibschicht (bei Bremsscheiben und Kupplungsscheiben) auf den Braunling, gegebenenfalls gefolgt von einer thermischen Konsolidierung in inerter Atmosphäre.

Schließlich erfolgt bspw. unter Anwendung des bekannten LSI-Verfahrens die thermische Konsolidierung und Vakuuminfiltration der porösen Braunlinge mit Flüssigmetall unter Reaktion des freien Kohlenstoffs mit dem Flüssigmetall zur Bildung von Metallcarbiden. Es reagiert bei diesem nur beispielhaft genannten LSI-Verfahren (= "Liquid Silicon Infiltration") bei kontrollierter Prozessführung unter Vakuum und oberhalb der Schmelztemperatur des verwendeten Metalls, nämlich Siliciums, im Wesentlichen der Kohlenstoff der Kunststoff-Matrix zu Siliciumcarbid und es bleiben die beigemengten Kohlenstoff-Fasern nahezu unberührt, so dass diese praktisch vollständig zur Erfüllung ihrer Verstärkungs-Funktion zur Verfügung stehen. Bei diesem LSI-Verfahren liegt die Restporosität bei niedrigen Werten von unter 3 %, weshalb dieses Verfahren insbesondere für die Herstellung von CSiC-Bremsscheiben mit einer Reibschicht für hohe Leistungen geeignet ist.

Alternative bekannte Verfahren zum Herstellen keramischer Formkörper aus einer erfindungsgemäß hergestellten bzw. vorbereiteten Kunststoffmasse können alternativ (zum LSI-Verfahren) angewandt werden, so beispielsweise das LPI-Verfahren ("Liquid Polymer Infiltration"), auch PIP-Verfahren genannt ("Polymer Infiltration and Pyrolysis") oder das CVI-Verfahren ("Chemical Vapor Infiltration").

Das genannte LPI-Verfahren stellt eine verkürzte Herstellungsroute zur Darstellung von beispielsweise für geringere Brems-Leistungen ausgelegte Bremsscheiben dar. Dieser Herstellprozess kann im Durchlauf betrieben werden, da ein eigenständiger Silizierprozess nicht erforderlich ist. Geeignete Polymere aus Kohlenwasserstoffen bilden bei der durchzuführenden Pyrolyse unter Volumenschwund und Ausgasung freien Kohlenstoff; der genannte Volumenschwund trägt dabei zu der im Oberbegriff des Patentanspruchs 1 angegebenen Verdichtung bei. Polymere, bei denen ein Teil der Kohlenstoffatome durch Siliciumatome ersetzt worden ist, zum Beispiel sogenannte Carbosilane (allgemein Silane, Siloxane und Silazane) bilden bei der Pyrolyse ebenfalls unter Volumenschwund (und daraus resultierender Verdichtung) und Ausgasung in analoger Weise ein amorphes und meist mit Kohlenstoff angereichertes Siliciumcarbid. Fasern, Fasergewebe oder Fasergewebestapel und auch dreidimensionale Fasergebilde lassen sich mit diesen Polymeren tränken bzw. infiltrieren. Durch anschließende Härtung und Pyrolyse (bei Temperaturen bis zu 1200°C) wird das Gebilde in einer ersten Stufe fixiert. Durch den auftretenden Volumenschwund besitzt die sich bildende Matrix in dieser Stufe noch eine relativ hohe Porosität, die für viele Anwendungen weniger geeignet sein kann. Um diese noch hohe Porosität zu senken, wird der eigentliche LPI-Prozess daher vorzugsweise mehrmals hintereinander, beispielsweise in fünf bis acht aneinander anschließenden Zyklen aus Imprägnierung, Härtung und Pyrolyse, durchgeführt, bis der faserverstärkte keramische Formkörper wie gewünscht hergestellt ist.

Gegebenenfalls kann beim LPI-Verfahren und beim LSI-Verfahren dem Matrixharz ein Füllstoffanteil beispielsweise aus Graphit-Pulverpartikeln in Form von Aktivkohle oder Koks und/oder SiC-Pulverpartikeln und/oder reaktive Füllstoffanteile wie beispielsweise Pulverpartikel aus Übergangsmetallsilizid (MoSi₂) zugesetzt werden, wodurch die Volumenschrumpfung gezielt beeinflusst bzw. reduziert werden kann, wobei aber mit der Zugabe des Füllstoffs weiterhin von einer Verdichtung gesprochen werden kann. Auch mit einer solchen Füllstoffzugabe führt das LPI-Verfahren bzw. PIP-Verfahren zu einer Restporosität, da zwangsweise jedes Polymer bei der Pyrolyse im Volumen schrumpft. Die Porosität ist dabei - wie bereits dargelegt - durch mehrmalige aufeinanderfolgende Prozessschritte, nämlich Zyklen von Infiltration und Pyrolyse, reduzierbar, bleibt aber in der Regel stets etwas höher als beim LSI-Verfahren.

Ein weiteres mögliches Verfahren zur Darstellung eines erfindungsgemäßen faserverstärkten keramischen Formkörpers, beispielsweise einer Keramik-Bremsscheibe, ist das CVI-Verfahren (Chemical Vapour Infiltration), welches zur Erzeugung einer Matrix in faserhaltigen Preforms aus einem Gasgemisch aus einer Kohlenstoffquelle (CH₄) und einer Wasserstoff-Silizium-Quelle (insbesondere H₂+CH₃SiCl₃ =Trimethylsilan) eingesetzt werden kann. Dieses Verfahren eignet sich insbesondere zur Erzielung von Bauteilen mit geringer Porosität oder zur Erzielung von Dichtegradienten bei unterschiedlicher SiC-Schichtdicke wie auch Infiltrationstiefe.

In besonders vorteilhafter Weise ist das CVI-Verfahren mit dem bereits geschilderten LPI-Verfahren kombinierbar, indem durch einen an den zuerst durchgeführten LPI-Herstellprozess ein CVI-Prozess angeschlossen wird, mit welchem die Restporosität der gewonnenen Formkörper zumindest reduziert werden kann oder gar eine von Fasern freie Schicht auf einem keramischen Grundkörper erzeugt werden kann. Damit ist es also möglich, zunächst nach dem LSI-Verfahren eine hochwertige keramische Bremsscheibe vorzuformen, deren äußere Reibschicht anschließend (durch einen CVI-Prozess) so eingestellt wird, dass sich in der sich dabei bildenden kohlenstoffhaltigen Schicht, welche als Reibschicht einer Bremsscheibe vorzugsweise hauptsächlich aus Carbiden aufgebaut ist, sehr wenige oder nahezu keine Fasern befinden, was für die Dauerhaltbarkeit einer Bremsscheibe äußerst vorteilhaft ist. Die Gefahr des Eindringens von Wasser in den Formkörper (d.h. die Bremsscheibe) kann hiermit praktisch ausgeschlossen werden. Der Vollständigkeit halber sei darauf hingewiesen, dass grundsätzlich auch anschließend an eine Herstellung eines keramischen faserverstärkten Grundkörpers nach dem LSI-Verfahren mit einem anschließenden CVI-Verfahren auf diesen eine weitere spezielle Schicht, bspw. als Reibschicht einer Bremsscheibe fungierend und nahezu keine Fasern enthaltend, also im wesentlichen eine Carbidschicht, aufgebracht werden kann.

Schließlich sei noch darauf hingewiesen, dass erfindungsgemäße Formkörper unter Verwendung einer erfindungsgemäßen Kunststoffmasse auch durch Sintern oder grundsätzlich auch durch Elektrophorese erzeugt werden können, und dass nach einem der soweit beschriebenen Schritte zur Herstellung einer Keramik-Bremsscheibe im Besonderen bzw. eines Keramik-Formkörpers im Allgemeinen eine Nachbearbeitung des (jeweiligen) Formkörpers erfolgen kann, wie beispielsweise eine Aufbringung eines Oxidationsschutzes beispielsweise auf eine bereits genannte Reibschicht. Beispielsweise kann auf eine erfindungsgemäß hergestellte Bremsscheibe eine selbstheilende Oxidationsschutzschicht aufgetragen werden, so bspw. boridische, carbidische, nitridische oder oxynitirdische Schichten vorzugsweise mittels chemischer Gasphasenabscheidung (CVD-Verfahren) oder gelöste Alkalimetall-, und/oder Erdalkalimetall- und/oder Übergangsmetallsalze (Nebengruppenelemente) der Phosphorsäure und/oder der Borsäure und/oder deren Metalloxide, vorzugsweise mit einem Bindemittel und vorzugsweise mittels Sprühen oder Tauchen. Eine solche selbstheilende Oxidationsschutzschicht härtet bei der ersten betriebsbedingten Erwärmung aus und wird bei einer späteren betriebsbedingten Erhitzung zunächst erweicht, woraufhin insbesondere durch weitere Bremsvorgänge eine neuerliche Gleichverteilung über der Bremsscheiben-Oberfläche erfolgen kann, und woraufhin mit einer geringen Abkühlung diese Oxidationsschutzschicht wieder erhärtet.

Ferner kann es vorteilhaft sein, wenn vor der Erzeugung von geformten Grünlingen die Fasern des Reste-Materials und/oder der Faser-Neuware vorzugsweise nach dem CVI-Verfahren mit Kohlenstoff beschichtet werden, so dass diese Fasern optimal gegen eine mögliche Korrosion geschützt sind.

Grundsätzlich zeichnet sich das erfindungsgemäße Verfahren durch einfache Verwendung von faserhaltigen Produktionsresten aus und ermöglicht darüber die Maßschneiderung der Leistungsfähigkeit und Robustheit der Formkörper an geforderte Anforderungsprofile, so wie sie beispielsweise im Automobilbereich auftreten. Vorteilhafterweise können auch verunreinigte Produktionsreste verwendet werden, wobei im Rahmen der Aufbereitung der Produktionsreste deren Anteil von Verunreinigungen auf mechanische oder thermische oder chemische Weise zumindest verringert werden kann. Beispiele für solche Verunreinigungen können Nähgarn aus Polyester, Glasfasern (diese schmelzen und können als Schlacke entfernt werden), Positionsmarkierungen aus Papier oder Karton (diese verbrennen) auch in Form von Aufklebern, Tackerklammern und weiteres mehr sein. Metallische Verunreinigungen aus den Produktionsresten, wie beispielsweise die genannten Tackerklammern können beispielsweise über einen Magnetabscheider eingesammelt werden und im Sinne einer vorteilhaften Weiterbildung der vorliegenden Erfindung dem Flüssigmetall und/oder dem zu verflüssigenden, zunächst noch festen Metall, mit welchem die Braunlinge im Falle des LSI-Verfahrens nach Verflüssigung infiltriert werden, zugeführt werden. Insofern können nicht nur die kohlenstoffhaltigen Fasern von Produktionsresten, sondern auch in den Produktionsresten enthaltene Metalle der Wiederverwertung zugeführt werden.

Zurückkommend auf die Aufbereitung insbesondere der kohlenstoffhaltigen Fasern der Produktionsreste, deren Faserlänge vor der Aufbereitung üblicherweise in der Größenordnung von 2 mm bis 1000 mm liegt, kann die Faserlänge bei der Aufbereitung auf einen Bereich von 0,5 mm bis 1000 mm, vorzugsweise von 1 mm bis 80 mm eingestellt werden. Die Verteilung der Faserbündelgröße kann im Bereich von 500 bis 100.000 Filamenten je Faser eingestellt werden. Die entsprechende Klassierung der Fasern kann bspw. in einem Fliehkraftabscheider durchgeführt werden.

Weiterhin sollen bei der Aufbereitung der Produktions-Reste die Fasern gezielt ausgerichtet werden, beispielsweise durch Kardieren und gegebenenfalls mit zusätzlichen Hilfsmitteln wie PP-Fasern oder über eine Ausrichtung im elektrostatischem Feld. Auch ist im Zuge der Aufbereitung der Produktions-Reste die Herstellung von vernähtem Vlies-Halbzeug möglich, insbesondere um eine gewünschte Lagenorientierung darzustellen.

Im Übrigen kann grundsätzlich den aufbereiteten Fasern bzw. der für die Erzeugung der Grünlinge vorgesehenen im Rahmen des Herstellprozesses zu verdichtenden Kunststoffmasse zusätzlicher Binder als Oxidationsschutz für die Fasern beigemengt werden. Gleichwohl kann vor der Erzeugung von geformten Grünlingen das kohlenstofffaserhaltige Material mit und ohne Produktionsreste zum Schutz im CVI-Prozess mit zusätzlichem Kohlenstoff überzogen und somit die Funktion als Verstärkungsfaser selbst nach Exposition in weiteren Prozessstufen aufrechterhalten werden.

Als Matrixharze bzw. als Kunststoffmaterial kommen für die zu verdichtende Kunststoffmasse insbesondere duroplastische Polymere wie beispielsweise Phenolharze oder auch Siliziumpolymerharze zum Einsatz. Die Härtungstemperatur des Grünlings beträgt dann bis zu 300°C. Die thermische Zersetzung des Grünlings zur Bildung des porösen Braunlings wird im Falle der Carbonisierung im Temperaturbereich von 750°C bis 980°C durchgeführt, im Falle der Graphitierung liegt die Temperatur deutlich darüber. Die Vakuuminfiltration des porösen Braunlings mit Flüssigmetall im LSI-Verfahren erfolgt vorzugsweise im Temperaturbereich von 1450°C bis 1800°C, wobei bevorzugt Silizium zur Infiltration und zur Bildung von Siliziumkarbid verwendet wird. Die Keramisierung der Formkörper im LPI-Verfahren wie auch CVI-Verfahren findet vorzugsweise im Temperaturbereich von 900°C bis 1200°C statt.

## Patentansprüche

1. Verfahren zur Herstellung faserverstärkter keramischer Formkörper, insbesondere von Bremsscheiben oder Kupplungsscheiben oder von beschusssicher gestalteten Aufbauteilen für Kraftfahrzeuge, aus einer im Laufe des Herstellprozesses verdichteten, härtbaren und Fasern enthaltenden Kunststoffmasse, wobei für besagte Kunststoffmasse ein kohlenstoffhaltige Fasern und Verunreinigungen enthaltendes Kunststoff-Material verwendet wird, welches aus Resten einer anderen Produktionslinie stammt,
**dadurch gekennzeichnet, dass** zunächst das aus Resten einer anderen Produktionslinie stammende Kunststoff-Material vor der Wiederverwertung aufbereitet wird, indem der Anteil von Kunststoff sowie von Verunreinigungen in diesem Reste-Material verringert wird und dass anschließend im Rahmen der Aufbereitung des Reste-Materials die Fasern durch Kardieren oder im elektrischen Feld gezielt ausgerichtet werden, und dass vor der Erzeugung von geformten Grünlingen die Fasern des Reste-Materials mit Kohlenstoff-Material beschichtet werden.

2. Verfahren nach Anspruch 1, **dadurch gekennzeichnet, dass** das Reste-Material vor der Erzeugung der zu verdichtenden Masse einem Pyrolyseprozess in inerter Atmosphäre unterzogen wird.

3. Verfahren nach Anspruch 1 oder 2, **dadurch gekennzeichnet, dass** der Anteil von Kunststoff sowie von Verunreinigungen im Reste-Material auf mechanischem und/oder physikalisch und/oder chemischem Weg verringert wird.

4. Verfahren nach einem der vorangegangenen Ansprüche, **dadurch gekennzeichnet, dass** das Reste-Material für die Aufbereitung versprödet wird.

5. Verfahren nach einem der vorangegangenen Ansprüche, **dadurch gekennzeichnet, dass** für die härtbare und Fasern enthaltende Kunststoffmasse zusätzlich mit Kunststoff versehene Faser-Neuware ergänzt wird.

6. Verfahren nach einem der vorangegangenen Ansprüche, **dadurch gekennzeichnet, dass** der für die Erzeugung der Grünlinge vorgesehenen im Laufe des Herstellprozesses verdichteten, härtbaren und Fasern enthaltenden Kunststoffmasse zusätzlicher Binder beigemengt wird.

7. Verfahren nach einem der vorangegangenen Ansprüche, **dadurch gekennzeichnet, dass** bei der Aufbereitung des Reste-Materials eine Faserlänge im Bereich von 0,5 mm bis 1000 mm, vorzugsweise von 1 mm bis 80 mm, und eine Faserbündelgröße im Bereich von 500 bis 100.000 eingestellt wird.

8. Verfahren nach einem der Ansprüche 1 - 7, wobei die Formkörper zunächst nach dem LPI-Verfahren ("Liquid Polymer Infiltration"), auch PIP-Verfahren genannt ("Polymer Infiltration and Pyrolysis"), gefolgt von einem CVI-Verfahren ("Chemical Vapor Infiltration") gefertigt werden.

9. Verfahren nach Anspruch 8, wobei dem Matrixharz ein Füllstoffanteil beispielsweise aus Graphit-Pulverpartikeln in Form von Aktivkohle oder Koks und/oder SiC-Pulverpartikeln und/oder reaktive Füllstoffanteile wie beispielsweise Pulverpartikel aus Übergangsmetallsilizid (Mo-Si₂) zugesetzt werden.

10. Verfahren nach einem der vorangegangenen Ansprüche, wobei sog. Grünlinge aus einer kohlenstoffhaltige Fasern enthaltenden Kunststoffmasse geformt und daraufhin einer thermischen Degradation in inerter Atmosphäre unterworfen werden, wonach eine thermische Konsolidierung und Vakuuminfiltration mit Flüssigmetall unter Reaktion des freien Kohlenstoffs mit dem Flüssigmetall zur Bildung von Metallcarbiden durchgeführt wird, **dadurch gekennzeichnet, dass** bei der Infiltration von Flüssigmetall ein wiederverwendetes Metall verwendet wird, indem metallische Anteile aus dem Reste-Material abgeschieden und dem Flüssigmetall oder dem zu verflüssigenden Metall zugeführt werden.

11. Verfahren nach einem der vorangegangenen Ansprüche, **dadurch gekennzeichnet, dass** auf den das Reste-Material beinhaltenden Keramik-Formkörper eine selbstheilende Oxidationsschutzschicht aufgebracht wird.

## Claims

1. A method for producing fibre-reinforced ceramic shaped bodies, more especially brake discs or clutch discs or bullet-proof body sections for motor vehicles, made from a hardenable plastics composition which contains fibres and which is compacted during the course of the production process, wherein, for said plastics composition, a carbonaceous plastics material containing fibres and contaminants is used, which originates from residues of another production line, **characterised in that,** firstly, the plastics material originating from residues of another production line is processed before the re-use by reducing the amount of plastic and of contaminants in this residual material, and **in that,** subsequently within the scope of the processing of the residual material, the fibres are selectively oriented by carding or in an electrical field, and **in that,** prior to the production of shaped green bodies, the fibres of the residual material are coated with carbon material.

2. A method according to claim 1, **characterised in that** the residual material is subjected to a pyrolysis process in an inert atmosphere prior to the production of the composition to be compacted.

3. A method according to claim 1 or 2, **characterised in that** the amount of plastic and of contaminants in the residual material is reduced mechanically and/or physically and/or chemically.

4. A method according to any one of the preceding claims, **characterised in that** the residual material is embrittled for the processing.

5. A method according to any one of the preceding claims, **characterised in that** the hardenable plastics composition containing fibres is additionally supplemented with new fibre products provided with plastic.

6. A method according to any one of the preceding claims, **characterised in that** the hardenable plastics composition containing fibres, which is compacted during the course of the production process for the production of the green bodies is additionally admixed with binder.

7. A method according to any one of the preceding claims, **characterised in that,** when processing the residual material, a fibre length in the range of from 0.5 mm to 1000 mm, preferably from 1 mm to 80 mm, and a fibre bundle size in the range of from 500 to 100,000 is set.

8. A method according to any one of claims 1 to 7, wherein the shaped bodies are first manufactured in accordance with the LPI (liquid polymer infiltration) method, also referred to as the PIP (polymer infiltration and pyrolysis) method, followed by a CVI (chemical vapour infiltration) method.

9. A method according to claim 8, wherein a filler portion, for example formed from graphite powder particles in the form of activated carbon or coke, and/or SiC powder particles and/or reactive filler portions, such as powder particles formed from transition metal silicide (MoSi₂), are added to the matrix resin.

10. A method according to any one of the preceding claims, wherein what are known as green bodies are shaped from a carbonaceous plastics composition containing fibres, and are then subjected to a thermal degradation in an inert atmosphere, whereupon a thermal consolidation and vacuum infiltration with liquid metal are performed, with reaction of the free carbon and the liquid metal to form metal carbides, **characterised in that,** in the case of the infiltration of liquid metal, a re-used metal is used by separating metal portions from the residual material and feeding these to the liquid metal or to the metal that is to be liquefied.

11. A method according to any one of the preceding claims, **characterised in that** a self-healing anti-oxidation layer is applied to the ceramic shaped body containing the residual material.

## Revendications

1. Procédé de fabrication de corps moulés en céramique renforcée par des fibres, notamment des disques de frein, des disques d'embrayage ou des éléments de blindage de carrosserie de véhicule, à partir d'une masse de matière plastique chargée de fibres comprimée, durcissable au cours du procédé de fabrication,
- selon lequel on utilise pour cette matière plastique, une matière plastique contenant des fibres de carbone et des impuretés, cette matière plastique provenant de résidus d'une autre ligne de production,
procédé **caractérisé en ce que**
- d'abord, on prépare la matière plastique provenant de résidus d'une autre ligne de production avant de la réutiliser en diminuant la part de la matière plastique et des impuretés de cette matière résiduelle,
- puis, dans le cadre de la préparation de la matière résiduelle, on oriente de manière ciblée les fibres par cardage ou dans un champ électrique, et
- avant de réaliser l'ébauche moulée, non cuite, on revêt les fibres de la matière résiduelle avec du carbone.

2. Procédé selon la revendication 1,
**caractérisé en ce qu'**
avant de réaliser la masse à comprimer, on soumet la matière résiduelle à un procédé de pyrolyse dans une atmosphère inerte.

3. Procédé selon la revendication 1 ou 2,
**caractérisé en ce qu'**
on diminue la part de matière plastique ainsi que celle des impuretés dans la matière résiduelle par un procédé mécanique et/ou physique et/ou chimique.

4. Procédé selon l'une des revendications précédentes,
**caractérisé en ce qu'**
on rend cassante la matière résiduelle pour sa préparation.

5. Procédé selon l'une des revendications précédentes,
**caractérisé en ce qu'**
on complète la matière plastique contenant des fibres et durcissables, en plus avec de la matière plastique contenant des fibres nouvelles.

6. Procédé selon l'une des revendications précédentes,
**caractérisé en ce qu'**
à la masse de matière plastique prévue pour réaliser les ébauches, on ajoute en cours de fabrication à cette matière plastique comprimée, durcissable et contenant des fibres, en plus un liant.

7. Procédé selon l'une des revendications précédentes,
**caractérisé en ce que**
pour la préparation de la matière résiduelle, on fixe une longueur de fibres de l'ordre de 0,5 mm - 1000 mm, de préférence entre 1 mm et 80 mm et une taille de faisceau de fibres de l'ordre de 500 à 100 000.

8. Procédé selon l'une des revendications 1 à 7, selon lequel on fabrique les corps moulés tout d'abord par le procédé LPI (« Liquid Polymer Infiltration ») encore appelé procédé PIP (« Polymer Infiltration and Pyrolysis ») suivi par un procédé CVI (« Chemical Vapor Infiltration »).

9. Procédé selon la revendication 8 selon lequel on ajoute à la matrice de résine une part de charge, par exemple des particules de poudre de graphite sous la forme de charbon actif ou de code et/ou des particules de poudre SiC et/ou des composants de charge réactive tels que par exemple des particules de poudre de silisure d'un métal de transition (Mo-Si₂).

10. Procédé selon l'une quelconque des revendications précédentes selon lequel on moule les ébauches non cuites en une masse de matière plastique contenant des fibres carbonées et ensuite, on soumet à une dégradation thermique dans une atmosphère inerte pour effectuer une consolidation thermique et une infiltration sous vide avec du métal liquide en faisant réagir le carbone libre avec le métal liquide pour former des carbures métalliques,
procédé **caractérisé en ce que**
pour l'infiltration du métal liquide, on utilise un métal réutilisable **en ce que** l'on sépare les composants métalliques de la matière résiduelle et on les ajoute comme métal liquide ou comme métal liquéfiable.

11. Procédé selon l'une des revendications précédentes,
**caractérisé en ce qu'**
on applique une couche anti oxydation, auto cicatrisante, sur le corps moulé en céramique contenant de la matière résiduelle.
